# EUROPEAN PATENT SPECIFICATION

(11) **EP 3 693 182 B1**
(45) Date of publication and mention of the grant of the patent: **27.10.2021**
(21) Application number: 19155905.3
(22) Date of filing: 07.02.2019
(51) Int. Cl.: B60B 3/16

(54) **NUT LOCKING DEVICE FOR FASTENING WHEELS OR SIMILAR**
MUTTERNSICHERUNGSVORRICHTUNG ZUR BEFESTIGUNG VON RÄDERN ODER DERGLEICHEN
DISPOSITIF DE VERROUILLAGE D'ÉCROU POUR FIXER DES ROUES OU SIMILAIRES

(43) Date of publication of application: 12.08.2020
(73) Proprietor: Safety Seal Europe AB, 467 30 Grästorp (SE)
(72) Inventor: NILSSON, Bengt Åke, 467 95 GRÄSTORP (SE)
(74) Representative: AWA Sweden AB

(56) References cited:
- EP-A1- 0 084 764
- WO-A1-2010/003250
- WO-A1-2017/153478
- US-A- 5 429 465
- US-A1- 2009 278 402

## Description

### Technical Field of the Invention

The present invention relates to a nut locking device, for fastening wheels or similar, to a method of producing the nut locking device and use thereof.

Examples of nut locking devices belonging to the state of the are are shown in US 2009/278402 A1 and WO 2017/153478 A1.

### Background of the Invention

There are often problems to overcome when using nut locking devices that cover the nuts in connection with use on vehicles. It could e.g. be that they may give a limited possibility for washing the wheel-nuts (e.g. if the vehicle have been used off-road which means that mud may have been deposited during usage) when such a device is in position. Also there may also be a limitation when trying to squeeze in a such device under a cover for rims (such as a TIR ring, fitted for pedestrian safety) which also may be part of the wheels. There are also other cosmetic covers for wheels (such as TIR-covers or wheel trims) where it might be tricky during usage to fit in a such device. Therefore, there is a need for a nut locking device which solves or at least mitigates one or more of the problems set out above.

### Summary of the Invention

The present invention thus solves one or more of the problems set out above by providing according to a first aspect of the present invention a nut locking device for locking at least two nuts to prevent them from turning, said nut locking device having an inner side and an outer side, wherein said nut locking device comprises:
at least two locking portions, wherein each one of said at least two locking portions is provided with a through hole configured to surround a nut,
at least one connecting portion connecting at least two of said locking portions, wherein an outer side of said connecting portion comprises a surface extending in a plane that is perpendicular to a central axis of said through holes.

Said nuts are preferably nuts adapted for usage together with wheels for fastening said wheels (which wheels preferably have tires and rims), which wheels preferably are mounted on a vehicle.

According to a second aspect of the present invention there is also provided a process for the manufacture of a nut locking device according to the first aspect comprising the following steps:
i) providing a moldable material into a mold,
ii) injection molding said material thus providing a nut locking device according to the first aspect, and
iii) separating said nut locking device from said mold, thus providing said nut locking device.

In step i) the moldable material may be conveyed through an inlet to said mold. In step iii) said nut locking device is finalized (through the separation of said mold from said nut locking device) and becomes ready for final usage (which also additionally may involve a further leveling step of the final product, before usage, to get rid of any superfluous solidified moldable material).

According to a third aspect of the present invention there is also provided use of a nut locking device according to the first aspect, or provided through the process according to the second aspect, for locking nuts at wheels, preferably mounted on a vehicle. Through using said device the wheel is better fastened via its nuts.

It is intended throughout the present description that the expression "nut" embraces any nut which could appear on wheels (with tires). These wheels (with tires) may e.g. be adapted for use on vehicles, such as on a commercial vehicle or on cars. The nut may further e.g. be a wheel-nut (also called lug nut). The device according to the first aspect may be especially useful for use on wheels (with tires) when mounted on a commercial vehicle, such as on a truck/lorry, on a bus or on a similar vehicle.

According to a preferred embodiment of the first aspect said, said surface is flat or convex or a combination thereof.

According to the invention said at least two nuts are wheel-nuts.

According to the invention said at least one connecting portion is a U-shaped solid body.

According to a preferred embodiment of the first aspect said inner side of said nut locking device is a wheel-facing side.

According to a preferred embodiment of the first aspect said nut locking device comprises a plurality of locking portions for locking a plurality of nuts, such as at least 6, 8 or 10 nuts.

According to a preferred embodiment of the first aspect, said nut locking device is annular, and wherein each locking portion is connected to at least two neighbouring locking portions.

According to a preferred embodiment of the first aspect each one of said connecting portions comprises a reinforcement portion.

According to a preferred embodiment of the first aspect said reinforcement portion comprises a resilient material. The reinforcement comprising the resilient material may have essentially triangular shape or an essentially rectangular shape.

According to a preferred embodiment of the first aspect each locking portion comprises a plurality of protrusions extending radially inwards from an inner wall of said through hole.

According to a preferred embodiment of the first aspect said device comprises a plastic material, preferably one or more polyolefins or a combination thereof, most preferred combined with a reinforcing material such as a material from the group comprising reinforcing glass, cellulose fibres, wood fibres, or combinations thereof, and/or other additives. Said additives may be e.g. UV-protection agents (such as carbon black) and/or antistatic agents.

According to a preferred embodiment of the first aspect said plastic material is selected from the group consisting of PP (polypropylene), PE (polyethylene, such as TPE and LDPE), or a combination thereof.

According to a preferred embodiment of the first aspect the inner side of the at least two locking portions and the inner side of the at least one connecting portion are arranged in a single geometric plane.

According to a preferred embodiment of the first aspect the outer side of the at least two locking portions and the outer side of the at least one connecting portion are arranged in a single geometric plane.

### Brief description of the drawings

Figure 1 discloses how an embodiment (1) with 8 holes, adapted to receive 8 nuts, is fastened.
Figures 2 and 3 disclose an embodiment (10) with 2 holes adapted to receive 2 nuts.
Figures 4, 5 and 6 disclose the embodiment (1) with 8 holes adapted to receive 8 nuts.
Figures 7, 8 and 9 disclose an embodiment (20) with 10 holes adapted to receive 10 nuts.
Figure 10 also discloses how the embodiment (1) with 8 holes, adapted to receive 8 nuts, is fastened.
Figures 11 show two variants of reinforcements (3, 3a and 3b) which may be made from a resilient material.

### Detailed description of the invention

In the following, non-limiting example there is disclosed how the nut locking device may be made.

### Example

A nut locking device may be made through a process whereby a moldable material is fed into a mold. The mold may have two parts that may be separable from each other. Subsequently an injection molding of said material is done providing a nut locking device according to the first aspect. To give rise to a useable product said nut locking device is separated from said mold, thus providing said nut locking device. The mold may also have two or more parts. The moldable material may be a plastic material and may be one or a combination of PP and PE (such as TPE and LDPE).

In the following, embodiments of the present invention will be discussed with reference to the accompanying figures. It should be noted that this detailed description by no means limits the scope of the invention. The scope of the invention is defined by the appended claims. Further, that specific features are mentioned in connection to an embodiment of the invention does not mean that those features cannot be used to an advantage together with other embodiments of the invention.

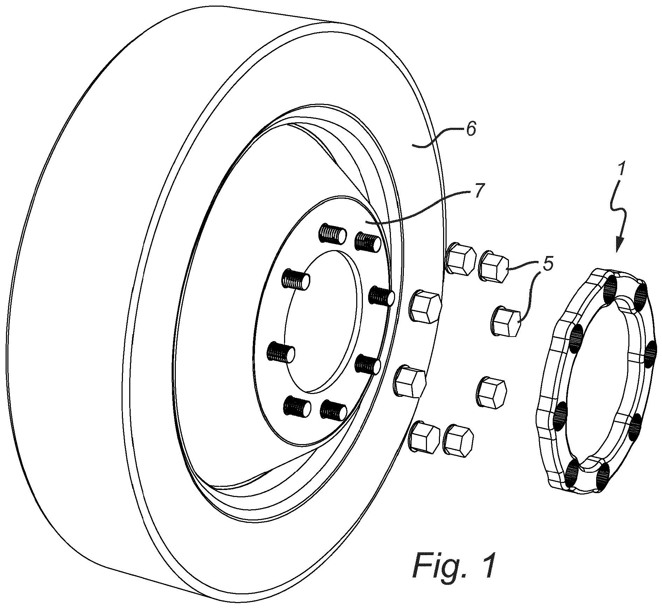

In figure 1 it is shown how the embodiment (1) with 8 holes adapted to receive 8 nuts (5) is fastened and thus applied to a wheel (with a tire) (6), and particularly how it is positioned in relationship to the rim (7) of said wheel. The wheel may further be fastened to a lorry/truck, a bus or a car, or to any other type of vehicle. As can be seen when mounted through using said device according to the first aspect of the present invention, in this case embodiment (1), the wheel is better fastened via its nuts when using said device. Thus the wheel is better anchored in an indirect way through the usage of said device, as said device prevents the nuts fastened at the wheel from turning.

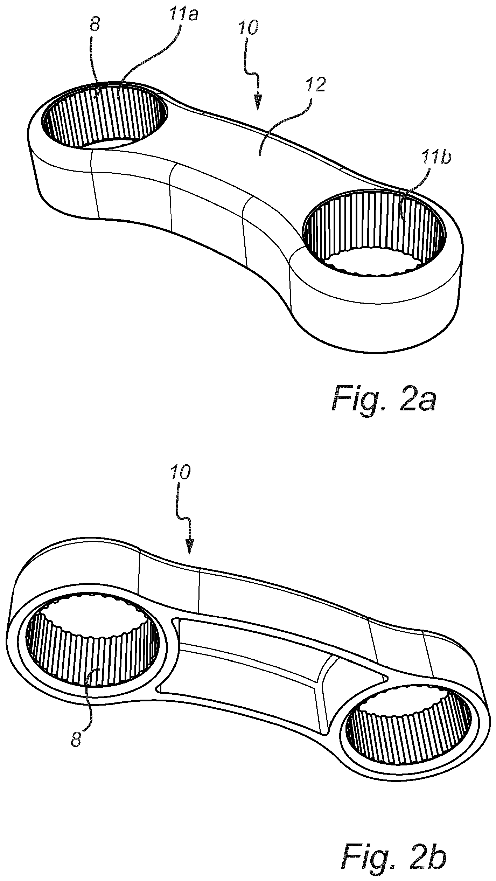

Figure 2 disclose an embodiment (10) with 2 holes (11a, 11b) adapted to receive 2 nuts. In particular, in Figure 2a and 2b the protrusions in the hole can clearly be seen for anchoring the nut. The connecting portion (12) is positioned between said holes. in Fig 2a it can be seen from a top perspective whereas it can be seen from a bottom perspective in Fig 2b. In figures 2a and 2b the protrusions (8) in the holes can clearly be seen for anchoring the nuts (5).

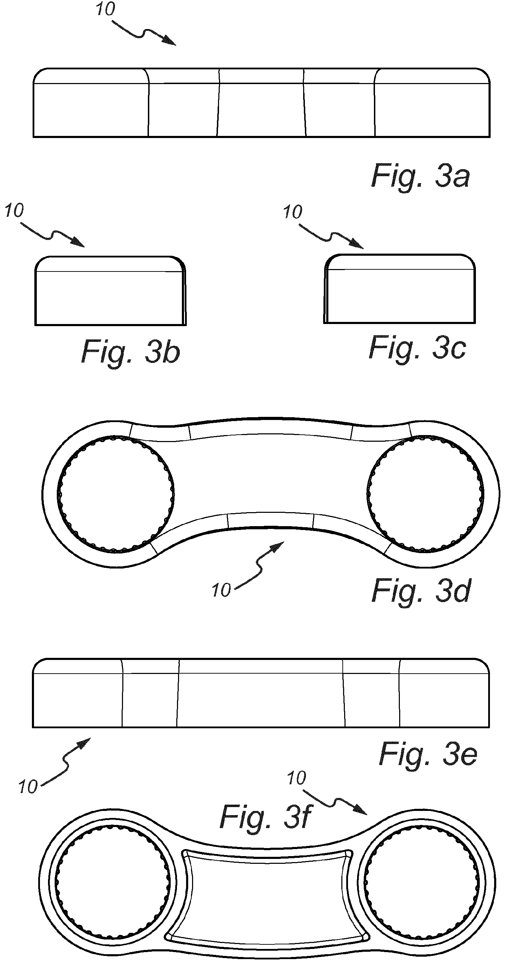

Figures 3 discloses as said, an embodiment (10) with 2 holes adapted to receive 2 nuts. In Fig 3a, 3b, 3c and 3e you can see it from different side views. In Fig 3d it can be seen from the top. In Fig 3f it can be seen from the bottom.

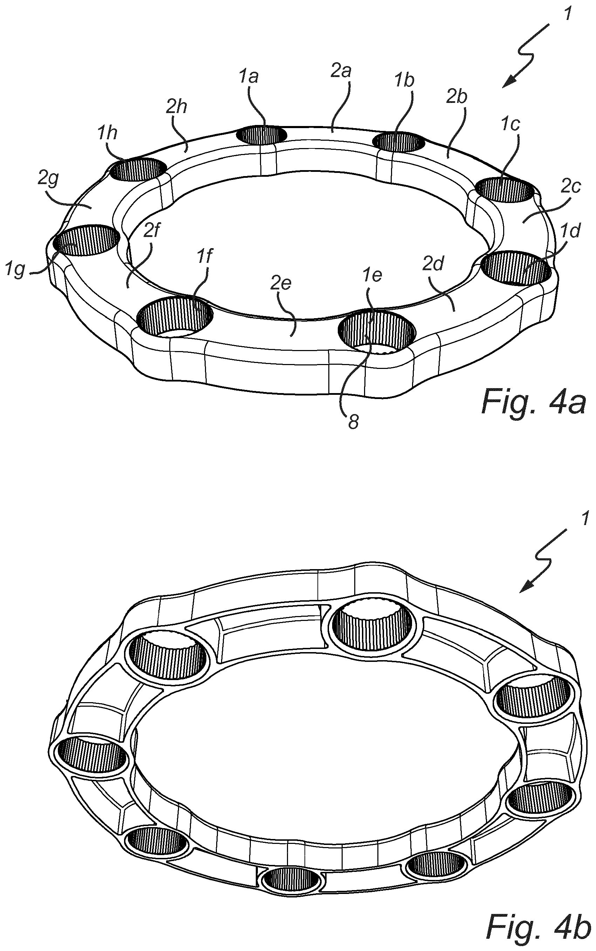

Figure 4 discloses as said above an embodiment (1) with 8 holes (1a, 1b, 1c, 1d, 1e, 1f, 1g and 1h) adapted to receive 8 nuts and in Fig 4a it can be seen from a top perspective whereas it can be seen from a bottom perspective in Fig 4b. The connecting portions (2a, 2b, 2c, 2d, 2e, 2f, 2g and 2h) are positioned between said holes. In figures 4a and 4b the protrusions (8) in the holes can also clearly be seen for anchoring the nuts (5) (c.f. Fig. 2).

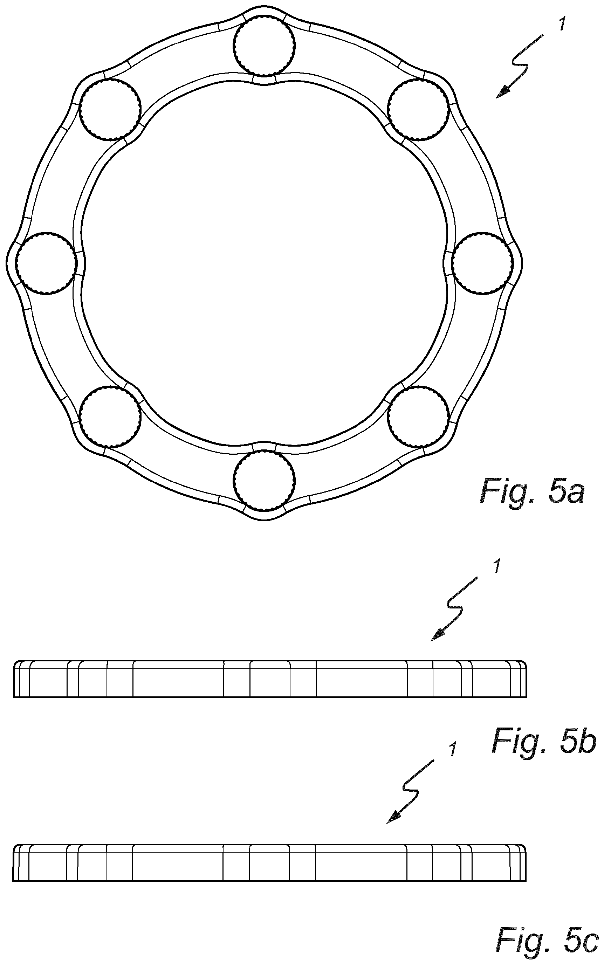

Figure 5 discloses as said above an embodiment (1) with 8 holes adapted to receive 8 nuts and in Fig 5a it can be seen from the top. In Fig 5b and 5c you can see it from the side.

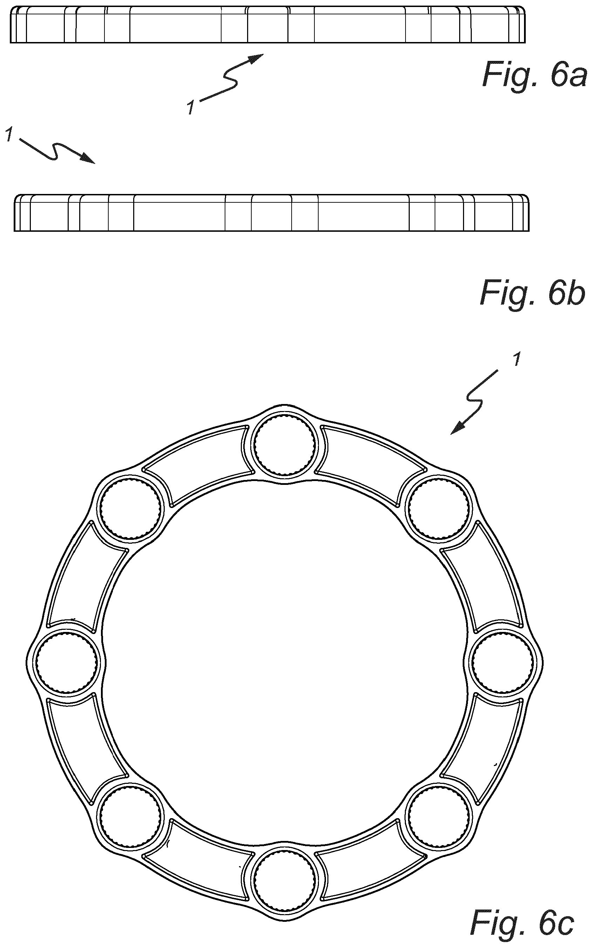

Figure 6 discloses as said above also an embodiment (1) with 8 holes adapted to receive 8 nuts and in Fig 6a and 6b you can see it from the side. In Fig 6c it can be seen from the bottom.

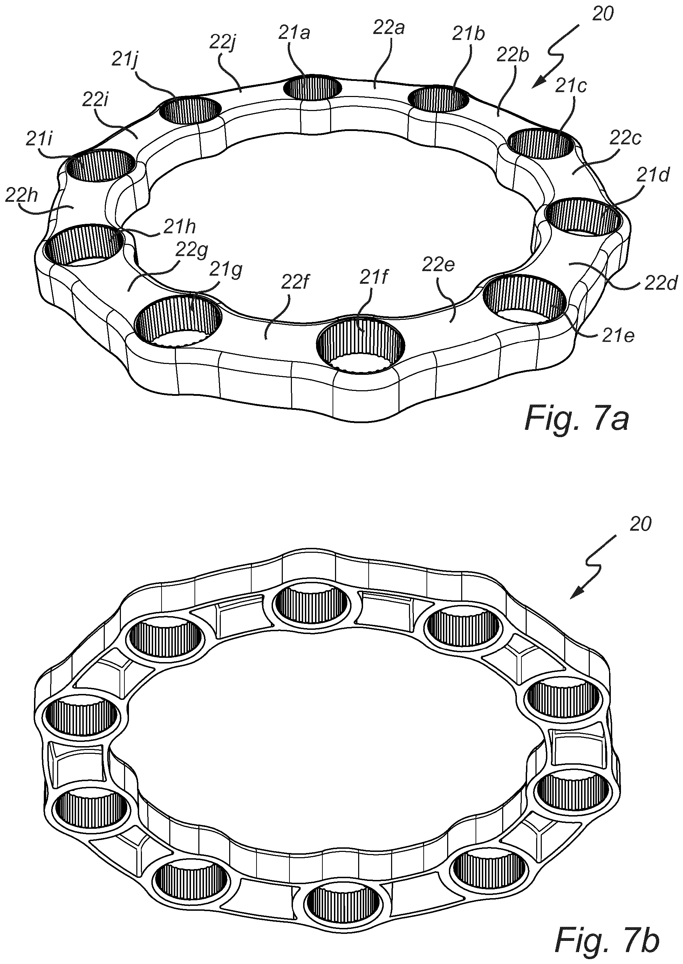

Figure 7 discloses as said above an embodiment (20) with 10 holes (21a, 21b, 21c, 21d, 21e, 21f, 21g, 21h, 21i and 21j) adapted to receive 10 nuts and in Fig 7a it can be seen from a top perspective whereas it can be seen from a bottom perspective in Fig 7b. The connecting portions (22a, 22b, 22c, 22d, 22e, 22f, 22g, 22h, 22i and 22j) are positioned between said holes. In figures 7a and 7b the protrusions (8) in the holes can also clearly be seen for anchoring the nuts (5) (c.f. Fig. 2).

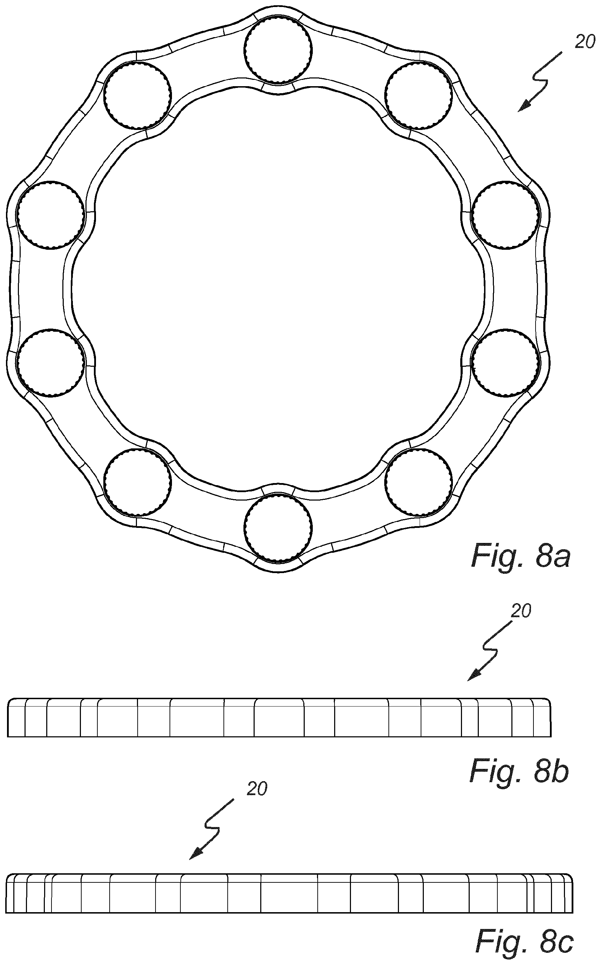

Figure 8 discloses as said above an embodiment (20) with 10 holes adapted to receive 10 nuts and in Fig 8a it can be seen from the top. In Fig 8b and 8c you can see it from the side.

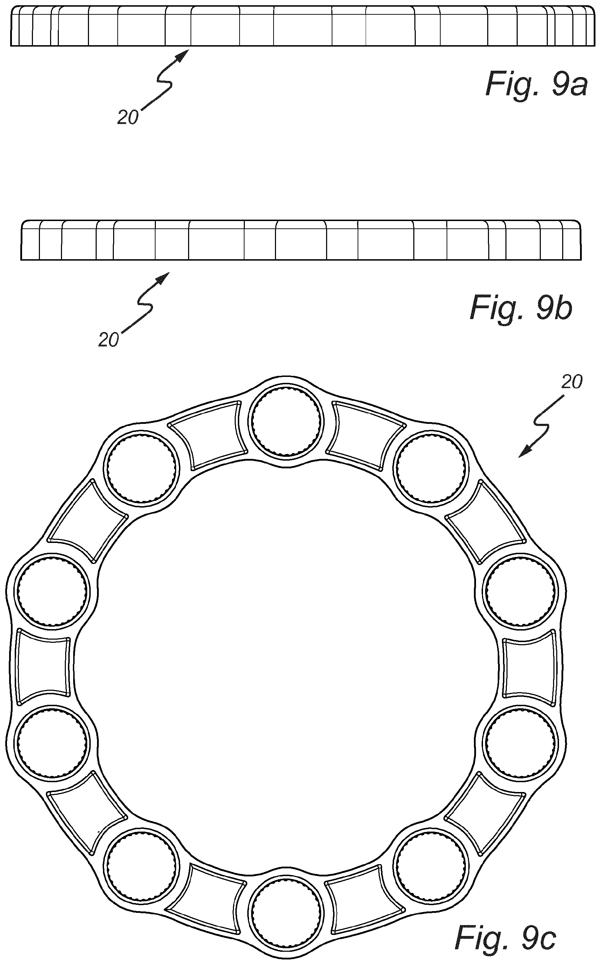

Figure 9 discloses as said above also an embodiment (20) with 10 holes adapted to receive 10 nuts and in Fig 9a and 9b you can see it from the side. In Fig 9c it can be seen from the bottom.

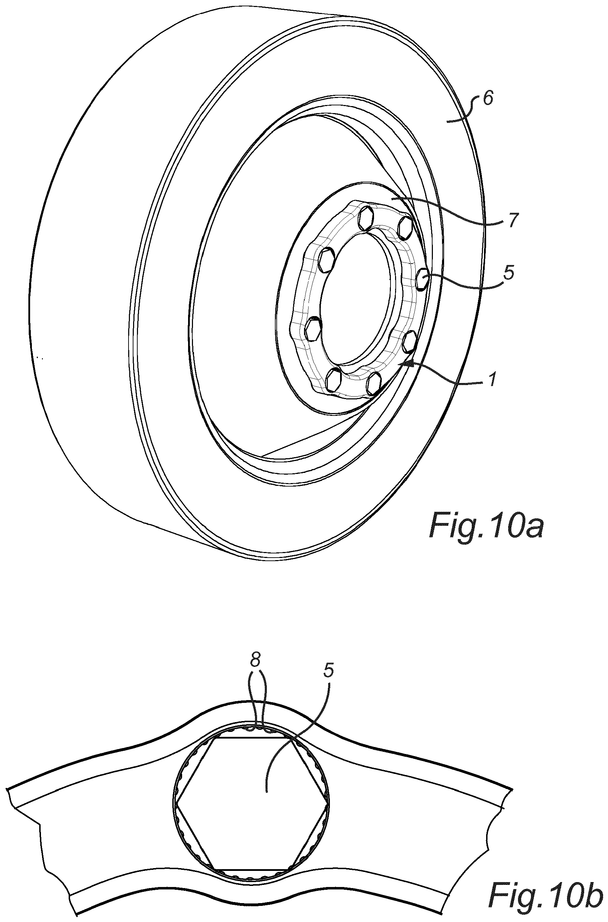

Figure 10 discloses how the embodiment (1) with 8 holes adapted to receive 8 nuts (5) has been fastened (Fig. 10a) on a wheel (with a tire) (6). Also the position of said device in relation to the rim (7) of said wheel can also be seen. In particular, in Figure 10b the protrusions (8) in the hole can clearly be seen for anchoring the nut (5).

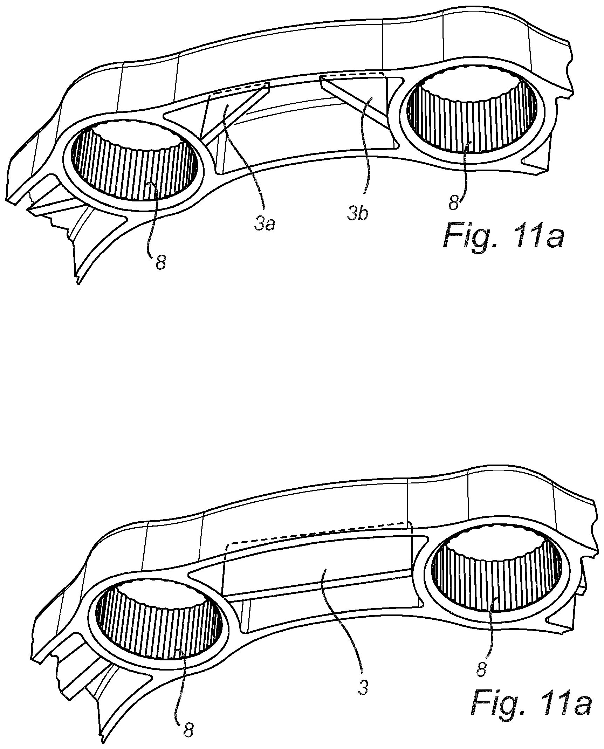

Figures 11 show two variants of reinforcements which may be made from a resilient material. One is essentially triangular which can be seen in Fig 11a with details 3a and 3b, and the other one rectangular which can be seen in Fig. 11b with detail 3. In figures 11a and 11b the protrusions (8) in the holes can also clearly be seen for anchoring the nuts (5).

Preferred features of each aspect of the invention are as for each of the other aspects mutatis mutandis.

## Claims

1. Nut locking device for locking at least two nuts (5) to prevent them from turning, said nut locking device having an inner side and an outer side, wherein said nut locking device comprises:
at least two locking portions, wherein each one of said at least two locking portions is provided with a through hole (11a, 11b; 1a, 1b, 1c, 1d, 1e, 1f, 1g, 1h; 21a, 21b, 21c, 21d, 21e, 21f, 21g, 21h, 21i, 21j) configured to surround a nut,
at least one connecting portion (12; 2a, 2b, 2c, 2d, 2e, 2f, 2g, 2h; 22a, 22b, 22c, 22d, 22e, 22f, 22g, 22h, 22i, 22j) connecting at least two of said locking portions, wherein an outer side of said connecting portion comprises a surface extending in a plane that is perpendicular to a central axis of said through holes and said at least two nuts are wheel nuts, **characterised in that** said at least one connecting portion is a U-shaped body.

2. Nut locking device according to claim 1, wherein said surface is flat or convex or a combination thereof.

3. Nut locking device according to any one of the preceding claims, wherein said at least one connecting portion is a solid or a hollow body.

4. Nut locking device according to any one of the preceding claims, wherein said inner side of said nut locking device is a wheel-facing side.

5. Nut locking device according to any one of the preceding claims, wherein the device comprises a plurality of locking portions for locking a plurality of nuts, such as at least 6, 8 or 10 nuts.

6. Nut locking device according to any one of the preceding claims, wherein the device is annular, and wherein each locking portion is connected to at least two neighbouring locking portions.

7. Nut locking device according to any one of the preceding claims, wherein each one of said connecting portions comprises a reinforcement portion (3; 3a, 3b).

8. Nut locking device according to claim 7, wherein said reinforcement portion comprises a resilient material.

9. Nut locking device according to any one of the preceding claims, wherein each locking portion comprises a plurality of protrusions (8) extending radially inwards from an inner wall of said through hole.

10. Nut locking device according to any one of the preceding claims, wherein said device comprises a plastic material, preferably one or more polyolefins or a combination thereof, most preferred combined with a reinforcing material and/or other additives.

11. Nut locking device according to claim 10, wherein said plastic material is selected from the group consisting of PP, PE or a combination thereof.

12. Nut locking device according to any one of the preceding claims, wherein the inner side of the at least two locking portions and the inner side of the at least one connecting portion are arranged in a single geometric plane.

13. Nut locking device according to any one of the preceding claims, wherein the outer side of the at least two locking portions and the outer side of the at least one connecting portion are arranged in a single geometric plane.

14. A process for the manufacture of a nut locking device according any one of the previous claims comprising the following steps:
i) providing a moldable material into a mold,
ii) injection molding said material thus providing a nut locking device, and
iii) separating said nut locking device from said mold, thus providing said nut locking device.

15. Use of a nut locking device according to any one of claims 1 - 13, or provided through the process according to claim 14, for locking nuts at wheels, preferably mounted on a vehicle.

## Patentansprüche

1. Mutternsicherungsvorrichtung zum Sichern von mindestens zwei Muttern (5), um ein Verdrehen zu verhindern, wobei die Mutternsicherungsvorrichtung eine Innenseite und eine Außenseite aufweist, wobei die Mutternsicherungsvorrichtung umfasst:
mindestens zwei Sicherungsabschnitte, wobei jeder der mindestens zwei Sicherungsabschnitte mit einem Durchgangsloch (11a, 11b; 1a, 1b, 1c, 1d, 1e, 1f, 1g,1h; 21a, 21b, 21c, 21d, 21e, 21f, 21g, 21h, 21i, 21j) versehen ist, das dazu konfiguriert ist, eine Mutter zu umgeben,
mindestens einen Verbindungsabschnitt (12; 2a, 2b, 2c, 2d, 2e, 2f, 2g, 2h; 22a, 22b, 22c, 22d, 22e, 22f, 22g, 22h, 22i, 22j), der mindestens zwei der Sicherungsabschnitte verbindet, wobei eine Außenseite des Verbindungsabschnitts eine Fläche umfasst, die sich in einer Ebene erstreckt, die senkrecht zu einer Mittelachse der Durchgangslöcher ist und mindestens zwei Muttern Radmuttern sind, **dadurch gekennzeichnet, dass** der mindestens eine Verbindungsabschnitt ein U-förmiger Körper ist.

2. Mutternsicherungsvorrichtung nach Anspruch 1, wobei die Oberfläche flach oder konvex oder eine Kombination davon ist.

3. Mutternsicherungsvorrichtung nach einem der vorhergehenden Ansprüche, wobei der mindestens eine Verbindungsabschnitt ein Vollkörper oder ein Hohlkörper ist.

4. Mutternsicherungsvorrichtung nach einem der vorhergehenden Ansprüche, wobei die Innenseite der Mutternsicherungsvorrichtung eine dem Rad zugewandte Seite ist.

5. Mutternsicherungsvorrichtung nach einem der vorhergehenden Ansprüche, wobei die Vorrichtung eine Mehrzahl von Sicherungsabschnitten zum Verriegeln einer Mehrzahl von Muttern umfasst, wie beispielsweise mindestens 6, 8 oder 10 Muttern.

6. Mutternsicherungsvorrichtung nach einem der vorhergehenden Ansprüche, wobei die Vorrichtung ringförmig ist und wobei jeder Sicherungsabschnitte mit mindestens zwei benachbarten Sicherungsabschnitten verbunden ist.

7. Mutternsicherungsvorrichtung nach einem der vorhergehenden Ansprüche, wobei jeder der Verbindungsabschnitte einen Verstärkungsabschnitt (3; 3a, 3b) umfasst.

8. Mutternsicherungsvorrichtung nach Anspruch 7, wobei der Verstärkungsabschnitt ein elastisches Material umfasst.

9. Mutternsicherungsvorrichtung nach einem der vorhergehenden Ansprüche, wobei jeder Sicherungsabschnitt eine Vielzahl von Vorsprüngen (8) umfasst, die sich von einer Innenwand des Durchgangslochs radial nach innen erstrecken.

10. Mutternsicherungsvorrichtung nach einem der vorhergehenden Ansprüche, wobei die Vorrichtung ein Kunststoffmaterial umfasst, vorzugsweise ein oder mehrere Polyolefine oder eine Kombination davon, am meisten bevorzugt kombiniert mit einem Verstärkungsmaterial und/oder anderen Additiven.

11. Mutternsicherungsvorrichtung nach Anspruch 10, wobei das Kunststoffmaterial ausgewählt ist aus der Gruppe bestehend aus PP, PE oder einer Kombination davon.

12. Mutternsicherungsvorrichtung nach einem der vorhergehenden Ansprüche, wobei die Innenseite der mindestens zwei Sicherungsabschnitte und die Innenseite des mindestens einen Verbindungsabschnitts in einer einzigen geometrischen Ebene angeordnet sind.

13. Mutternsicherungsvorrichtung nach einem der vorhergehenden Ansprüche, wobei die Außenseite der mindestens zwei Sicherungsabschnitte und die Außenseite des mindestens einen Verbindungsabschnitts in einer einzigen geometrischen Ebene angeordnet sind.

14. Verfahren zur Herstellung einer Mutternsicherungsvorrichtung nach einem der vorhergehenden Ansprüche, umfassend die folgenden Schritte:
i) Bereitstellen eines formbaren Materials in eine Form,
ii) Spritzgießen des Materials, wodurch eine Mutternsicherungsvorrichtung bereitgestellt wird, und
iii) Trennen der Mutternsicherungsvorrichtung von der Form, wodurch die Mutternsicherungsvorrichtung bereitgestellt wird.

15. Verwendung einer Mutternsicherungsvorrichtung nach einem der Ansprüche 1 bis 13 oder bereitgestellt durch das Verfahren nach Anspruch 14 zum Sichern von Muttern an Rädern, die vorzugsweise an einem Fahrzeug montiert sind.

## Revendications

1. Dispositif de blocage d'écrou pour bloquer au moins deux écrous (5) pour les empêcher de tourner, ledit dispositif de blocage d'écrou ayant un côté intérieur et un côté extérieur, dans lequel ledit dispositif de blocage d'écrou comprend :
au moins deux portions de blocage, chacune desdites au moins deux portions de blocage étant pourvue d'un trou traversant (11a, 11b; 1a, 1b, 1c, 1d, 1e, 1f, 1g, 1h ; 21a, 21b, 21c, 21d, 21e, 21f, 21g, 21h, 21i, 21j) configuré pour entourer un écrou,
au moins une portion de liaison (12; 2a, 2b, 2c, 2d, 2e, 2f, 2g, 2h; 22a, 22b, 22c, 22d, 22e, 22f, 22g, 22h, 22i, 22j) reliant au moins deux desdites portions de blocage, dans lequel un côté extérieur de ladite portion de liaison comprend une surface s'étendant dans un plan qui est perpendiculaire à un axe central desdits trous traversants, et lesdits au moins deux écrous sont des écrous de roue, **caractérisé en ce que**
ladite au moins une portion de liaison est un corps en forme de U.

2. Dispositif de blocage d'écrou selon la revendication 1, dans lequel ladite surface est plate ou convexe ou une combinaison de celles-ci.

3. Dispositif de blocage d'écrou selon l'une quelconque des revendications précédentes, dans lequel ladite au moins une portion de liaison est un corps plein ou creux.

4. Dispositif de blocage d'écrou selon l'une quelconque des revendications précédentes, dans lequel ledit côté intérieur dudit dispositif de blocage d'écrou est un côté faisant face à la roue.

5. Dispositif de blocage d'écrou selon l'une quelconque des revendications précédentes, dans lequel le dispositif comprend une pluralité de portions de blocage pour bloquer une pluralité d'écrous, tel qu'au moins 6, 8 ou 10 écrous.

6. Dispositif de blocage d'écrou selon l'une quelconque des revendications précédentes, dans lequel le dispositif est annulaire, et dans lequel chaque portion de blocage est reliée à au moins deux portions de blocage voisines.

7. Dispositif de blocage d'écrou selon l'une quelconque des revendications précédentes, dans lequel chacune desdites portions de liaison comprend une portion de renfort (3 ; 3a, 3b).

8. Dispositif de blocage d'écrou selon la revendication 7, dans lequel ladite portion de renfort comprend un matériau élastique.

9. Dispositif de blocage d'écrou selon l'une quelconque des revendications précédentes, dans lequel chaque portion de blocage comprend une pluralité de saillies (8) s'étendant radialement vers l'intérieur depuis une paroi interne dudit trou traversant.

10. Dispositif de blocage d'écrou selon l'une quelconque des revendications précédentes, dans lequel ledit dispositif comprend une matière plastique, de préférence une ou plusieurs polyoléfines ou une combinaison de celles-ci, le plus préférablement combinée avec une matière de renforcement et/ou d'autres additifs.

11. Dispositif de blocage d'écrou selon la revendication 10, dans lequel ladite matière plastique est choisie dans le groupe consistant en PP, PE ou une combinaison de ceux-ci.

12. Dispositif de blocage d'écrou selon l'une quelconque des revendications précédentes, dans lequel le côté intérieur des au moins deux portions de blocage et le côté intérieur de l'au moins une portion de liaison sont agencés dans un même plan géométrique.

13. Dispositif de blocage d'écrou selon l'une quelconque des revendications précédentes, dans lequel le côté extérieur des au moins deux portions de blocage et le côté extérieur de l'au moins une portion de liaison sont agencés dans un même plan géométrique.

14. Procédé de fabrication d'un dispositif de blocage d'écrou selon l'une quelconque des revendications précédentes comprenant les étapes suivantes :
i) fournir un matériau moulable dans un moule,
ii) mouler par injection ledit matériau fournissant ainsi un dispositif de blocage d'écrou, et
iii) séparer ledit dispositif de blocage d'écrou dudit moule, fournissant ainsi ledit dispositif de blocage d'écrou.

15. Utilisation d'un dispositif de blocage d'écrou selon l'une quelconque des revendications 1 à 13, ou fourni par le procédé selon la revendication 14, pour bloquer des écrous sur des roues, de préférence montées sur un véhicule.
